# EUROPÄISCHE PATENTSCHRIFT

(11) **EP 1 089 148 B1**
(45) Veröffentlichungstag und Bekanntmachung des Hinweises auf die Patenterteilung: **12.09.2007**
(21) Anmeldenummer: 00114004.5
(22) Anmeldetag: 04.07.2000
(51) Int. Cl.: G05B 19/05

(54) **Verfahren und Vorrichtung zur Motorantrieb-Steuerung**
Method and device for motor drive control
Méthode et dispositif de commande de moteur d'entrainement

(30) Priorität: 30.09.1999 DE 19947251
(43) Veröffentlichungstag der Anmeldung: 04.04.2001
(73) Patentinhaber: ROBERT BOSCH GMBH, 70442 Stuttgart (DE)
(72) Erfinder: Sommer, Rainer, 70499 Stuttgart (DE); Stober, Markus, 71701 Schwieberdingen (DE); Ege, Taskin, 71732 Tamm (DE)

(56) Entgegenhaltungen:
- DE-A1- 3 327 376
- US-A- 5 151 855

## Beschreibung

### Stand der Technik

Die Erfindung betrifft Verfahren und Vorrichtung zur Steuerung von Prozessen in Verbindung mit einem Antrieb, insbesondere einem Motor in einem Fahrzeug, wobei die Prozesse bei und/oder nach Abschaltung des Antriebs ausgeführt und gesteuert werden gemäß den Oberbegriffen der unabhängigen Ansprüche.

Dazu zeigt die DE 33 27 376 A1 ein Verfahren und eine Vorrichtung zur Steuerung der Stellung der Drosselklappe im Ansaugrohr einer Brennkraftmaschine. Dabei wird bei Abschaltung die Drosselklappe zunächst für eine festgelegte Zeit in die geschlossene Stellung gefahren und danach wieder geöffnet. Über ein Zeitglied wird dazu nach Abschaltung der Brennkraftmaschine die Stromversorgung für eine entsprechende elektronische Steuereinheit noch aufrecht erhalten. Dadurch erfolgt ein sicheres Abschalten der Brennkraftmaschine ohne nachfolgende, unkontrollierte Verbrennungsvorgänge und durch das nachfolgende erneute Öffnen wird ein Verklemmen der sich abkühlenden Drosselklappe vermieden. Hierbei wird die eine Steuereinheit, welche den zeitlich festgelegten Prozeß des Schließens und Öffnens der Drosselklappe steuert durch ein Zeitglied im Nachlauf von der Energieversorgung getrennt.

Bei Einsatz mehrerer Prozessoren bzw. Steuereinheiten ist die Verwendung eines Zeitgliedes aufgrund der dadurch fehlenden Koordination der Prozessoren problematisch, da durch einen plötzlichen Verlust der Energieversorgung, ausgelöst durch ein Zeitglied, Probleme bei der Abarbeitung kritischer Prozesse durch mehrere unkoordinierte Prozessoren auftreten können. So zeigt sich, daß der Stand der Technik nicht in jeder Hinsicht optimale Ergebnisse zu liefern vermag.

Aus der US 5,151,855 ist bekannt, dass die Trennung von prozesssteuernden Prozessoren von der Energieversorgung nach einem Ausschaltsignal zeitverzögert erfolgt, wobei die Verzögerungszeit fest ist. Dabei können Probleme bei der Abarbeitung kritischer Prozesse durch mehrere unkoordinierte Prozessoren auftreten.

Daraus ergibt sich die Aufgabe einerseits den Funktionsablauf in der Nachlaufphase von jedem Prozessor bzw. jeder Steuereinheit eigenständig durchführen zu lassen und dennoch die Beendigung des Nachlaufs, also die Abtrennung von der Energiezufuhr der Steuereinheiten koordiniert durchzuführen.

### Vorteile der Erfindung

Die Erfindung geht aus von einem Verfahren und einer Vorrichtung zur Steuerung von Prozessen mit Hilfe von Prozeßgrößen in Verbindung mit einem Antrieb, insbesondere einem Motor in einem Fahrzeug, wobei die Prozesse bei und/oder nach Abschaltung des Antriebs ausgeführt und gesteuert werden und die Energieversorgung durch wenigstens einen Energiespeicher bei und/oder nach Abschaltung des Antriebs erhalten bleibt. Die Prozesse werden dabei von wenigstens zwei Prozessoren bzw. Steuereinheiten gesteuert bzw. geregelt, wobei der erste Prozessor den wenigstens zweiten Prozessor dann von der Energieversorgung trennt bzw. in einen Abschaltzustand bringt, wenn die Prozeßgrößen jeweils eine vorgebbare Bedingung erfüllen. Die Prozeßgrößen und/oder die wenigstens eine vorgebbare Bedingung werden vom zweiten Prozessor dem ersten Prozessor übermittelt. Im Anschluß wertet der erste Prozessor die übermittelten Informationen des zweiten Prozessors sowie die eigenen Prozeßgrößen und deren zu erfüllende Bedingungen aus und trennt sich selbst, sowie die Regelstrecke von der Energieversorgung durch den wenigstens einen Energiespeicher.

Vorteilhafterweise wird dabei durch die Prozeßgrößen bzw. die vorgebbaren Bedingungen die Beendigung der Prozeßabläufe bzw. deren Steuerung dargestellt, so daß bei der Systemabschaltung sichergestellt werden kann, daß alle Prozesse, eingeschlossen die sicherheitskritischen, kontrolliert zu Ende geführt sind, bevor die Energieversorgung abgetrennt wird.

Durch die Verwendung mehrerer Prozessoren und deren Koordinationen der Nachlaufabschaltung können, auch im Nachlauf, unterschiedliche Funktionen durch die einzelnen Prozessoren abgearbeitet werden. Somit ist vorteilhafterweise eine Aufgabenverteilung im Steuergerät bei sicherer Abschaltung möglich.

Wenn als Bedingung keine Zeitbedingung verwendet wird, ist es zweckmäßigerweise nicht notwendig, die Abarbeitungsdauer der einzelnen Nachlauffunktionen zu kennen, beispielsweise um ein Zeitglied darauf einzustellen. So können auch unvorhergesehene Zwischenfälle, die beispielsweise die Abarbeitungsdauer der Nachlauffunktionen verlängern, die koordinierte, kontrollierte, sichere Abschaltung nicht verhindern.

Durch die koordinierte Abschaltung, erst wenn die gesteuerten Prozesse einen sicheren Zustand erreicht haben, ist es vorteilhafterweise nicht nötig, Nachlauffunktionen symmetrisch zwischen den Prozessoren aufzuteilen oder auch Toleranzen von Bauteilen oder applizierbare Daten bei der Systemauslegung dahingehend zu berücksichtigen.

Vorteilhafterweise ist damit die Nachlaufzeit unter den jeweiligen Betriebsbedingungen immer möglichst kurz, d.h. die Energieversorgung wird immer optimal schnell abgeschaltet. Somit wird zweckmäßigerweise ein überflüssiger Stromverbrauch und damit ungewolltes Entleeren des wenigstens einen Energiespeichers im Fahrzeug, insbesondere der Fahrzeugbatterie, vermieden. Wird zweckmäßigerweise die Nachlaufabschaltung durch einen der Prozessoren durchgeführt, kann eine gemeinsame Nachlaufenergieversorgung für alle Prozessoren bzw. den kompletten Digitalteil und/oder weitere Schaltungsteile, insbesondere der Regelstrecke, eingesetzt werden, wodurch sich Vorteile bezüglich der Komplexität und der Kosten der Hardwareschaltung ergeben.

Sofern die Schnittstellen zwischen den Prozessoren, typischerweise für den Informationsaustausch ohnehin vorhanden sind, können ebenfalls die Informationen, die die Koordination der Nachlaufabschaltung ermöglichen, über diese Schnittstellen übertragen werden, so daß kein zusätzlicher Hardwareaufwand entsteht.

Weiterhin von Vorteil ist, daß die wenigstens zwei Prozessoren beliebig angeordnet sein können, d.h. auch eine Verteilung über mehrere Steuergeräte ist zweckmäßigerweise möglich. Damit erfolgt die Koordination der Nachlaufabschaltung vorteilhafterweise auch, um Informationen zwischen den Steuergeräten sicher auszutauschen.

Weitere Vorteile und vorteilhafte Ausgestaltungen ergeben sich aus der Beschreibung und den Ansprüchen.

### Zeichnung

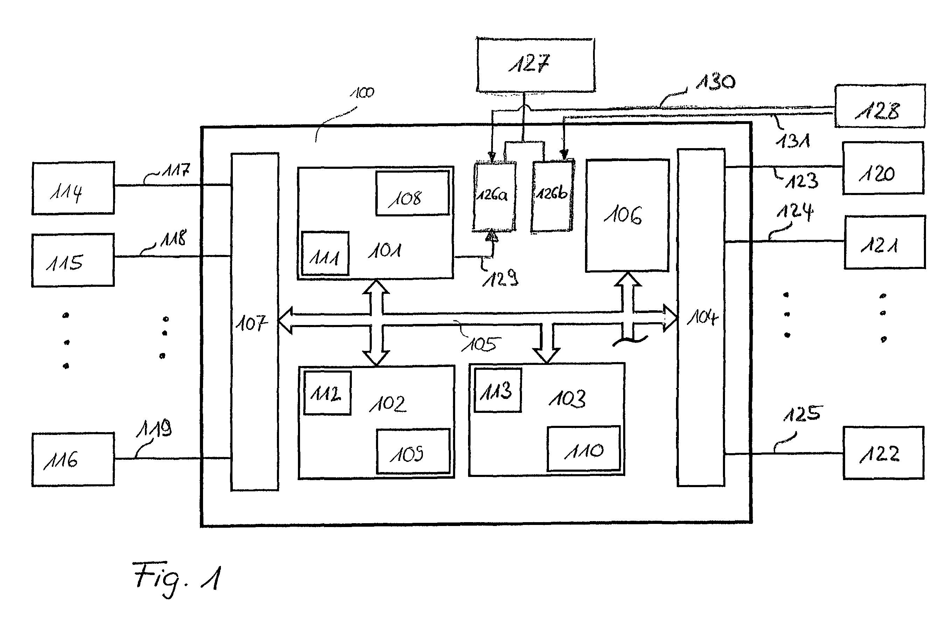

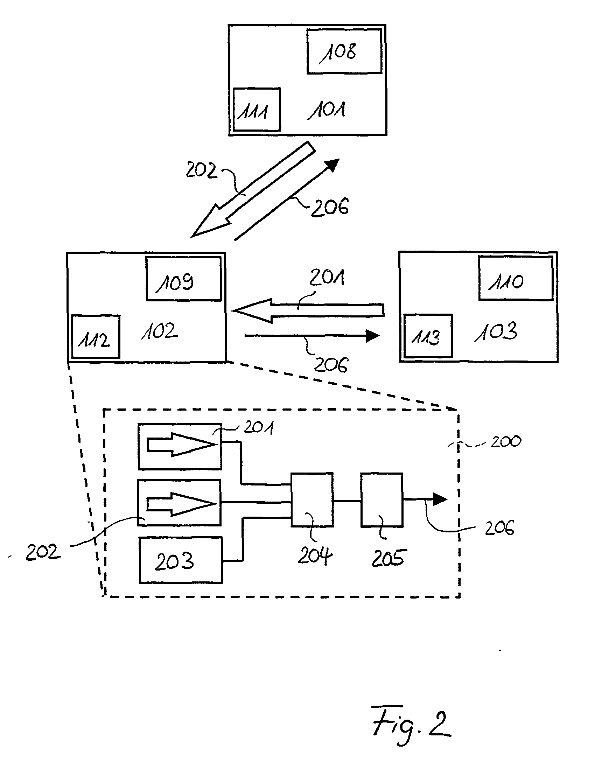

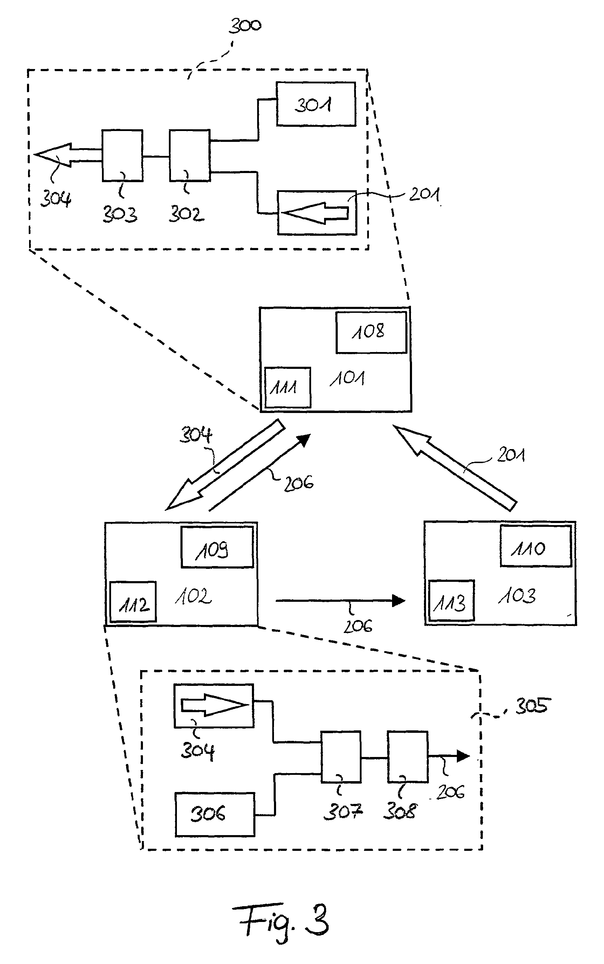

Figur 1 zeigt ein allgemeines Steuerungssystem von Prozessen in einem Fahrzeug, insbesondere zur Motorsteuerung. Figur 2 zeigt ein Konzept zur Nachlaufabschaltung bei drei Prozessoren mit verschiedenen Variationsmöglichkeiten. Ein zweites Konzept zur Nachlaufabschaltung ebenfalls mit Variationen ist in Figur 3 dargestellt.

### Beschreibung der Ausführungsbeispiele

Figur 1 zeigt ein elektronisches Steuergerät 100, welches wenigstens zwei Rechner 101 und 102, eine Eingangsbaugruppe 107, eine Ausgangsbaugruppe 104 sowie ein Bussystem 105 umfaßt. Zusätzlich ist mit 103 ein weiterer Rechner zur besseren Veranschaulichung verschiedener erfindungsgemäßer Ausführungsformen im Steuergerät 100 dargestellt. Die Anzahl der Prozessoren im Steuergerät beträgt demnach wenigstens zwei. Optional können weitere Bauelemente und/oder Baugruppen angedeutet durch Element 106 an das Bussystem 105 angekoppelt sein. Diese zusätzlichen optionalen Elemente sind beispielsweise zusätzliche Speicherelemente und/oder eine zusätzliche Ein-/Ausgangsschnittstelle des Kommunikationssystems 105, insbesondere für die Diagnose oder zur Verbindung des Steuergerätes 100 über Kommunikationssystem 105 mit anderen Steuergeräten, usw.

Die Eingangsbaugruppe 107 kann zusammen mit der Ausgangsbaugruppe 104 ebenso als Eingangs-/Ausgangsbaugruppe zusammengefaßt sein. Der Rechner 101 enthält dabei unter anderem einen Prozessor 111 und einen diesem Prozessor 111 zugeordneten Programmspeicher 108. Der in dem Programmspeicher 108 abgelegte Programmcode umfaßt unter anderem die Programme zur Steuerung der Prozesse des Fahrzeugs und die Programme zur erfindungsgemäßen Nachlaufabschaltung. Der in den Programmspeichern 108 bis 110 jeweils abgelegte Programmcode entspricht somit dem möglichen Funktionsumfang bezüglich der Steuerung bzw. Regelung der Prozesse, wie er jeweils durch die Prozessoren 111 bis 113 abgearbeitet werden kann. Die Programmspeicher 109 und 110 sowie die zugehörigen Prozessoren 112 und 113 sind in den jeweiligen Rechnern 102 und 103 untergebracht.

Dabei müssen die wenigstens zwei Prozessoren bzw. die Rechner nicht wie hier dargestellt in einem Steuergerät untergebracht sein, sondern können über mehrere Steuergeräte bzw. weitere Steuerungsintelligenz verteilt sein. Damit ist dann auch eine Koordination der Abschaltung mehrerer Steuergeräte und der sichere Austuasch von Information zwischen den Steuergeräten gewährleistet.

Der Eingangsbaugruppe 107 werden Signale zugeführt, welche gemessenen und/oder gebildeten Prozeßgrößen bzw. Betriebsgrößen der Fahrzeugprozesse entsprechen. Dabei sind alle im Fahrzeug zu steuernden bzw. zu regelnden Prozesse, wie eine Motorsteuerung, eine Getriebesteuerung, eine Steuerung des Fahrwerks, insbesondere der Bremsen, eine Steuerung von Kleinmotoren z.B. für Fensterheber und/oder Schiebedach, eine Steuerung von sonstigen Stellern, wie z.B. elektronischen Türschlössern u.s.w. denkbar. Insbesondere sind dies Prozeßgrößen bzw. Betriebsgrößen, die zur Steuerung bzw. Regelung einer Brennkraftmaschine ausgewertet werden können.

Die genannten Signale werden von Meßeinrichtungen 114 bis 116, insbesondere Sensoren, erfaßt und über Eingangsleitungen 117 bis 119 der Eingangsbaugruppe 107 zugeführt. Dabei kann in einzelnen Meßeinrichtungen auch eine Bildung einer Prozeßgröße, beispielsweise aus weiteren erfaßten Größen erfolgen. Über Eingangsbaugruppe 107 gelangen die den Signalen entsprechenden Informationen auf das Kommunikationssystem 105. Über die Ausgangsbaugruppe 104 werden daneben Signale ausgegeben, welche Stellelemente bzw. Aktuatoren 120 bis 122 zur Einstellung wenigstens einer Betriebsgröße bzw. Prozeßgröße der jeweiligen Regelstrecke, insbesondere der Brennkraftmaschine des Fahrzeugs betätigen. Die entsprechenden Signale zur Ansteuerung der Akutatoren 120 bis 122 werden über die Ausgangsleitungen 123 bis 125 übermittelt. In Abhängigkeit der Eingangssignale, bzw. daraus abgeleiteteter Betriebs- bzw. Prozeßgrößen und/oder interner Größen bilden die Rechner 101 bis 103 im Rahmen dort implementierter Programme Werte für die auszugebenden Steuergrößen, die die Stellelemente 120 bis 122 im Sinne einer vorgegebenen Steuerstrategie bzw. Regelstrategie einstellen.

Bei einer bevorzugten Ausführungsform handelt es sich bei dem Steuergerät 100 um eine Steuereinheit zur Steuerung einer Antriebseinheit, insbesondere einer Brennkraftmaschine, eines Fahrzeugs. Dabei wird nun beispielsweise in bekannter Weise die Stellung eines vom Fahrer betätigbaren Bedienelementes erfaßt, ausgewertet und ein Sollwert für ein Drehmoment der Antriebseinheit ermittelt. Ebenso kann dann unter Berücksichtigung von über die Eingangsbaugruppe 107 empfangenen Sollwerten anderer Steuersysteme, wie beispielsweise einer Antriebsschlupfregelung, einer Getriebesteuerung, u.s.w. sowie intern gebildeter Sollwerte (Begrenzungen, etc.) dieser Sollwert für das Drehmoment ermittelt werden. Dieser wird dann in diesem bevorzugten Ausführungsbeispiel einer Brennkraftmaschinensteuerung in einen Sollwert für die Stellung der Drosselklappe, der im Rahmen eines Lageregelskreises eingestellt wird, umgewandelt. Ferner sind je nach Ausstattung der Brennkraftmaschine weitere leistungsbestimmende Funktionen vorgesehen, beispielsweise Steuerung eines Turboladers einer Abgasrückführung, einer Leerlaufdrehzahlregelung u.s.w. Darüber hinaus sind z.B. bei Brennkraftmaschinen mit Benzindirekteinspritzung nicht nur die Lufteinstellung, sondern auch die Bestimmung der einzuspritzenden Kraftstoffmasse, die Bestimmung eines einzustellenden Luft/Kraftstoffverhältnisses, die Vorgabe des Einspritzverlaufes (Voreinspritzung, Nacheinspritzung), die Steuerung einer Ladungsbewegungsklappe u.s.w. leistungsbestimmend, so daß dort neben den geschilderten einen Vielzahl weiterer Programme zur Prozeßsteuerung vorzusehen sind, die Einfluß auf die Leistung der Brennkraftmaschine somit auf die Sicherheit des Kraftfahrzeugs haben. Diese Vielzahl an Prozessen und diese Prozesse steuernden Programme ist in Form eines Programmcodes in dem jeweiligen Programmspeicher der Rechner 108 bis 110 abgelegt und/oder dorthin ladbar.

Im Nachlauf können die genannten und weitere Prozesse beispielsweise einer Überprüfung unterzogen werden. Ebenso ist es denkbar weitere Sicherheitsfunktionen im Hinblick auf eine neuerliche Inbetriebnahme des Antriebs durchzuführen. Die dabei im Nachlauf durchzuführenden Prozesse, also bei und/oder nach Abschalten des Antriebs, können auch schon vorher begonnen haben und werden im Nachlauf zu Ende geführt.

Mit Element 127 ist ein Energiespeicher, insbesondere wenigstens eine Batterie eines Fahrzeugs, bezeichnet, aus welcher das Steuergerät 100 mit Energie versorgt wird. Anstelle des einen Energiespeichers, insbesondere der Fahrzeugbatterie, können mehrere Energiespeicher vorgesehen sein. Die Energieversorgung wenigstens des Nachlaufs durch den wenigstens einen Energiespeicher kann ebenso, z.B. anstelle der Fahrzeugbatterie im Steuergerät bzw. in einem Steuergerät selbst realisiert sein. Diese Energieversorgung mit z.B. je einem Energiespeicher pro Rechner bzw. Prozessor diesen zuzuordnen und örtlich nah zu den Prozessoren bz. Rechner unterzubringen ist ebenfalls denkbar.

Mit Element 126a und Element 126b sind zwei Schaltmittel gezeigt, durch welche die Energiezufuhr aus dem Energiespeicher 127 zum Steuergerät 100 unterbrochen werden kann. Die Schaltmittel 126a und 126b beispielsweise als einfache Schalter oder als Unipolar- oder Bipolartransistor realisiert, sind in dieser Ausführungsform so angeordnet, daß ein leitendes Schaltmittel genügt, um das Steuergerät 100 aus dem Energiespeicher 127 mit Energie zu versorgen.

Mit 128 ist dabei ein Bedienelement dargestellt, beispielsweise ein Türschalter, ein Startschalter bzw. Zündschalter, u.s.w., welches eine interne Logik umfaßt oder anspricht. Diese interne Logik dient dazu, die beiden Schaltmittel 126a und 126b über die Leitungen 130 und 131 derart anzusteuern, daß bei Einschalten des Startschalters bzw. der Zündung oder als weitere Möglichkeit bei Öffnen der Tür beide Schalter 126a und 126b geschlossen werden und so das Steuergerät 100 über redundante Pfade mit Energie versorgt wird. Bei Abstellen des Antriebs wird aber nur Schaltmittel 126b geöffnet. Damit bleibt durch das geschlossene Schaltmittel 126a die Energieversorgung des Steuergerätes für den Nachlauf erhalten. So wird bei Ausschalten des Antriebs lediglich der Schalter 126b über Leitung 131 geöffnet wohingegen Schaltmittel 126a geschlossen wird oder bleibt, wodurch die Energiezufuhr aufrechterhalten ist. Über Ansteuerleitung 129 kann der Rechner 101 ebenfalls das Schaltmittel 126a betätigen und so das Steuergerät bzw. die einzelnen Rechner 101 bis 103, insbesondere die Prozessoren 111 bis 113, im Nachlauf von der Energiezufuhr trennen.

Aus Kostengründen ist in diesem Ausführungsbeispiel lediglich Rechner 101 in der Lage, die Energiezufuhr zu unterbinden. Generell ist aber auch denkbar, daß jeder Rechner 101 bis 103 separat die Energiezufuhr über eine jeweilige Schaltmittelanordnung und somit auch individuell für die einzelnen Rechner bzw. Prozessoren und/oder weiterer Schaltungsteile unterbinden kann. Anstatt über Steuerleitung 129 kann beispielsweise ein intelligentes Schaltmittel 126a bzw. 126b auch über das interne Kommunikationssystem 105 angeschlossen und somit ansteuerbar sein.

Im Falle einer Motorsteuerung in Figur 1 wird somit der Antrieb selbst durch Bedienelement 128 abgeschaltet wohingegen das Steuergerät 100 über Schaltmittel 126a weiterhin mit Energie versorgt wird. Nach dem Ausschalten der Zündung bzw. des Startschalters erfolgt somit ein Steuergeräte- bzw. Rechnernachlauf, indem die Spannungsversorgung des Digitalteils und bei Bedarf weiterer Schaltungsteile weiter erhalten bleibt und in dem verschiedene Funktionen bzw. Prozesse ablaufen können. Diese Prozesse sind beispielsweise eine Motorauslauferkennung, das Ermitteln von Abstellbetriebsgrößen, Abarbeitung der Fehlerspeicherverwaltung, umspeichern von Größen in nichtflüchtige Speicher, u.s.w. Damit kann die Steuerung der einzelnen Prozesse in der Nachlaufphase von jedem Rechner 101 bis 103 bzw. den zugehörigen Mikroprozessoren 111 bis 113 wie zugewiesen eigenständig durchgeführt werden.

Gleiches gilt beispielsweise für den Fall, daß mit Bedienelement 128 ein Türschloßschalter bezeichnet ist durch welchen beispielsweise bei Schließen der Tür Stellantriebe für Fensterheber oder Dachfenster aktiviert werden und wenigstens einer der Rechner 101 bis 103 im Nachlauf, wenn die Fenster geschlossen sind, beispielsweise das Geschlossensein der Fenster überprüft.

Eine Variante zur Nachlaufkoordination ist in Figur 2 gezeigt. Hier sind mit 101 bis 103 wiederum die Rechner im Steuergerät 100 dargestellt. Enthalten sind darin wieder die Prozessoren 111 bis 113 sowie die Speicher 108 bis 110, wie bereits genannt. Wie erwähnt kann die Steuerung der Prozesse bzw. des Funktionsablaufs im Nachlauf in jedem Rechner unabhängig voneinander erfolgen. In der Praxis beträgt die Nachlaufzeit z.B. wenige Sekunden oder auch viele Minuten, dies hängt unter anderem von verschiedenen Betriebsbedingungen ab.

Das Halten und Abschalten der Energieversorgung für zwei oder mehr Rechner bzw. Prozessoren wird durch einen Prozessor gesteuert, allerdings erfolgt eine Koordination der Nachlaufabschaltung zwischen mindestens zwei der Prozessoren. Die Koordination der Nachlaufabschaltung kann beispielsweise so ausgeführt sein, daß Rechner 101 und Rechner 103 jeweils die Informationen 201 bzw. 202 an Rechner 102 senden, daß sie mit ihrer Funktionsabarbeitung bzw. Prozeßabarbeitung im Nachlauf fertig sind. Rechner 102 kann dann unter Berücksichtigung der eigenen Nachlaufprozesse entscheiden, wann der Nachlauf zu beenden ist. Dazu empfängt Rechner 102 Informationen 201 des Rechners 103 sowie Informationen 202 des Rechners 101 bezüglich der Nachlaufprozeßabarbeitung, beispielsweise Prozeßgrößen bzw. durch deren Auswertung entstandene Größen, wie in Funktionsdarstellung 200 gezeigt. Zu diesen Informationen 201 und 202 berücksichtigt der Rechner 102 noch die eigenen Nachlaufprozeßinformationen 203. Die Informationen 201 und 202 sowie 203 werden dann in Element 204 verknüpft. Diese Verknüpfung 204 kann im einfachsten Fall einer UND-Logik/-Verknüpfung bezüglich der Informationen 201, 202 und 203 entsprechen. Ebenso kann eine 2 aus 3 Auswahl der Informationen 201 bis 203 oder die Berücksichtigung einer maximalen Nachlaufzeit sinnvoll sein. Als Information der Rechner 101 und 103 kann auch der momentane Zustand der Funktions- bzw. Prozeßabarbeitung, z.B. welche Teilprozesse bereits beendet sind, zu Rechner 102 übertragen und dort in der Nachlaufkoordination berücksichtigt werden.

Beispielsweise bei gleichzeitigem Einsatz einer Zeitbedingung und den Koordinationsinformationen kann bei einer Abschaltung der Energiezufuhr eine Priorität der Teilprozesse Berücksichtigung finden. Je nach Sicherheitsrelevanz werden die Teilprozesse verschiedenen Prioritätsebenen zugeordnet. Bestimmte Teilprozesse niederer Priorität müssen z.B. für eine sichere Abschaltung nicht zwingend durchgeführt werden. Damit kann eine Abtrennung der Energieversorgung im Nachlauf auch koordiniert durchgeführt werden wenn eine vorgebbare Zeit abgelaufen ist und die kritischen Prioritätsebenen bzw. deren Teilprozesse bereits beendet sind, ohne daß alle möglichen Prozesse im Nachlauf abgearbeitet werden müssen.

Nach Verknüpfung bzw. Auswertung der Informationen in Block 204 ist durch diesen eine Abschaltaufforderung ausgebbar. Diese wird nun in Block 205 je nach Anwendung aufbereitet. Das aufbereitete Abschaltsignal 206 kann einmal wie in Figur 2 dargestellt als Quittungsinformation für die Rechner 101 und 103 dienen, um diesen mitzuteilen, daß sie abgeschaltet werden und ebenso als Signal über Leitung 129 in Figur 1 zur Bedienung des Schaltmittels 126a. Die Nachlaufabschaltung muß aber nicht direkt durch Rechner 102 erfolgen. Rechner 102 kann die koordinierte Information aus Element 204 bzw. das aufbereitete Abschaltsignal aus Element 205 an einen anderen Rechner weitergeben, welcher dann die Abschaltung durchführt. Auch dazu könnten die Quittungsinformationen 206 eingesetzt werden.

Wie in Figur 3 gezeigt, muß die Koordination der Nachlaufabschaltung aber nicht zwingend als Gesamtschritt in einem Rechner bzw. einem Prozessor erfolgen. Als weitere Ausführungsform wird somit die Prozeßinformation 201 bzw. die Prozeßgrößen von Rechner 103 zur Rechner 101 übertragen. Funktionsblock 300 veranschaulicht die Verarbeitung in Rechner 101. Die Prozeßinformation 201 des Rechners 103 wird darin mit der Eigenprozeßinformation 301 des Rechners 101 über Block 302 verknüpft, bzw. miteinander ausgewertet. Dies kann vergleichbar Funktionsblock 200 geschehen. Die Auswertung der Information liefert ein Signal bzw. eine Nachricht an Block 303, welcher diese zu einer Prozeßinformation 304, die nun die Prozeßinformation der Rechner 101 und 103 beinhaltet, verarbeitet und diese zu Rechner 102 übermittelt.

Rechner 102 koordiniert bzw. verknüpft Prozeßinformation 304 sowie die eigene Pozeßinformation 306 über Block 307 in Funktionsblock 305 zu einem Signal bzw. einer Nachricht/Information für Block 308. Block 308 wiederum gibt eine Informationsquittung 206 des aufgearbeiteten Signals von 307 aus. Diese Informationsquittung kann im einfachsten Fall wiederum das Abschaltsignal sein. Dieses wird dann von Rechner 102 an die beiden Rechner 101 und 103 als Abschaltinformation übergeben bzw. kann gleichzeitig oder ersatzweise bei Signalpfad 129 auf das Schaltmittel 126a wirken und die Energiezufuhr abtrennen. So werden also die Informationen aus Rechner 101 und 103 in Rechner 101 koordiniert und diese Teilinformation in Form von Prozeßinformation 304 an Rechner 102 weitergegeben, welcher dann die Gesamtkoordination und Nachlaufabschaltung durchführt.

In einer weiteren Ausgestaltung ist vorgesehen, daß die abzuschaltenden Rechner, welche mit der Informationsquittung 206 beschickt wurden vor oder beim Abschalten nochmals eine Kontrollquittung an den Rechner senden, welcher die Gesamtkoordination und schlußendlich die Nachlaufabschaltung durchführt.

Wenn das beschriebene Betätigen der Schaltmittel 126a und 126b das Steuergerät 100, also die Rechner bzw. Prozessoren im Gesamten von der Energieversorgung trennt, kann mit der Information 206 der jeweilige Rechner bzw. Prozessor zumindest derart ausgeschaltet werden, das er sich in einem stand-by-Zustand, also einem Verweilzustand befindet, also nicht mehr aktiv ist und keine Steueraufgaben mehr übernimmt.

Weiterhin können aber auch Teile des Steuergerätes, insbesondere die Rechner bzw. Prozessoren, mit jeweils eigenen Energieversorgungen bzw. Verbindungen zu dem Energiespeicher versehen sein. Dann kann der Prozessor, der die Nachlaufkoordination durchführt die entsprechenden Teile ganz abschalten, durch Trennung von der Energieversorgung. Dadurch ist dann eine kaskadierte Abschaltung des Steuergerätes möglich. Insbesondere kann jeder Rechner bzw. Prozessor getrennt komplett abgeschaltet werden, wenn er die ihm zugeordneten Prozesse im Nachlauf abgearbeitet hat.

Die Abschaltung als Trennung von der Energieversorgung der Rechner bzw. Prozessoren erfolgt somit also entweder in einem Schritt oder kaskadiert. Erfolgt die Abschaltung in einem Schritt, so können die Rechner bzw. Prozessoren, die die Nachlaufkoordination nicht durchführen vorab in einen stand-by-Zustand, also einen passiven Verweilzustand durch den die Nachlaufkoordination bzw. die Nachlaufabschaltung durchführenden Rechner gebracht werden, bevor schließlich alle Rechner bzw. Prozessoren von der Energieversorgung getrennt werden. Der stand-by-Zustand entspricht dann der Abschaltung des jeweiligen Rechners, als Überführung in den sicheren Zustand, obwohl das Steuergerät insgesamt noch mit Energie versorgt wird.

## Patentansprüche

1. Verfahren zur Steuerung von Prozessen mit Hilfe von Prozeßgrößen in Verbindung mit einem Antrieb, insbesondere einem Motor zum Antreiben eines Fahrzeugs, wobei die Prozesse bei und/oder nach Abschaltung des Antriebs ausgeführt und gesteuert werden und die Energieversorgung der Prozesse und der Steuerung durch wenigstens einen Energiespeicher bei und/oder nach Abschaltung des Antriebs erhalten bleibt, **dadurch gekennzeichnet, daß** die Prozesse von wenigstens zwei Prozessoren gesteuert werden und der erste Prozessor dann den wenigstens zweiten Prozessor und sich selbst von der Energieversorgung trennt, wenn die Prozeßgrößen der Prozesse der jeweiligen Prozessoren jeweils wenigstens eine vorgebbare Bedingung erfüllen.

2. Verfahren nach Anspruch 1, **dadurch gekennzeichnet, daß** der erste Prozessor den wenigstens zweiten Prozessor und sich selbst frühestens dann von der Energieversorgung trennt, wenn die Prozeßgrößen der Prozesse der jeweiligen Prozessoren jeweils die Beendigung der Steuerung der Prozesse anzeigen und der zweite Prozessor dem ersten Prozessor die Beendigung der Steuerung der Prozesse übermittelt hat.

3. Verfahren nach Anspruch 1, **dadurch gekennzeichnet, daß** der erste Prozessor den wenigstens zweiten Prozessor und sich selbst jeweils nach Ablauf wenigstens einer vorgebbaren Zeit von der Energieversorgung trennt.

4. Verfahren nach Anspruch 1, **dadurch gekennzeichnet, daß** den Prozessen verschiedene Prioritäten zugeordnet werden und der erste Prozessor bereits dann sich selbst und den wenigstens zweiten Prozessor von der Energieversorgung trennt, wenn die Prozeßgrößen der Prozesse höherer Priorität der jeweiligen Prozessoren jeweils die Beendigung der Steuerung der Prozesse anzeigen und der wenigstens zweite Prozessor dem ersten Prozessor die Beendigung der Steuerung der Prozesse höherer Priorität übermittelt hat.

5. Verfahren nach den Ansprüchen 1 und 4, **dadurch gekennzeichnet, daß** der erste Prozessor sich selbst und den wenigstens zweiten Prozessor erst dann nach einer jeweils vorgebbaren Zeit von der Energieversorgung trennt, wenn die Prozeßgrößen der Prozesse höherer Priorität der jeweiligen Prozessoren jeweils die Beendigung der Steuerung der Prozesse anzeigen und der wenigstens zweite Prozessor dem ersten Prozessor die Beendigung der Steuerung der Prozesse höherer Priorität übermittelt hat

6. Verfahren nach Anspruch 1, **dadurch gekennzeichnet, daß** die Prozesse von mehr als zwei Prozessoren gesteuert werden und daß ein wenigstens dritter Prozessor dem zweiten Prozessor die Erfüllung der jeweils vorgebbaren Bedingung der Prozeßgrößen übermittelt und der zweite Prozessor dem ersten Prozessor die Erfüllung der jeweils vorgebbaren Bedingung der Prozeßgrößen des dritten und des zweiten Prozessors übermittelt und der erste Prozessor den zweiten und wenigstens dritten Prozessor sowie sich selbst frühestens dann von der Energieversorgung trennt, wenn die Prozeßgrößen der Prozesse der jeweiligen Prozessoren jeweils wenigstens eine vorgebbare Bedingung erfüllen.

7. Verfahren nach Anspruch 1, **dadurch gekennzeichnet, daß** jeder Prozessor sich selbst von der Energieversorgung trennt wenn die Prozeßgrößen jeweils eine vorgebbare Bedingung erfüllen.

8. Verfahren nach einem der vorhergehenden Ansprüche, **dadurch gekennzeichnet, daß** der wenigstens zweite und gegebenenfalls wenigstens dritte Prozessor zunächst in einen passiven Verweilzustand geschaltet werden und danach alle Prozessoren gleichzeitig durch den ersten Prozessor von der Energieversorgung getrennt werden, wenn die Prozeßgrößen jeweils eine vorgebbare Bedingung erfüllen.

9. Vorrichtung zur Steuerung von Prozessen mit Hilfe von Prozeßgrößen in Verbindung mit einem Antrieb, insbesondere einem Motor zum Antrieb eines Fahrzeugs, wobei erste Mittel enthalten sind, welche die Prozesse bei und/oder nach Abschaltung des Antriebs ausführen und steuern und die Energieversorgung durch wenigstens einen Energiespeicher bei und/oder nach Abschaltung des Antriebs erhalten bleibt, **dadurch gekennzeichnet, daß** die ersten Mittel wenigstens zwei Prozessoren enthalten, welche die Prozesse steuern und der erste Prozessor dann den wenigstens zweiten Prozessor und sich selbst von der Energieversorgung trennt, wenn die Prozeßgrößen der Prozesse der jeweiligen Prozessoren jeweils eine vorgebbare Bedingung erfüllen.

## Claims

1. Method for controlling processes with the aid of process variables in conjunction with a drive, in particular a motor for driving a vehicle, with the processes being executed and controlled when and/or after the drive is switched off and the supply of power to the processes and the control means being maintained by at least one energy storage means when and/or after the drive is switched off, **characterized in that** the processes are controlled by at least two processors and the first processor disconnects the at least second processor and itself from the power supply means when the process variables of the processes of the respective processors each satisfy at least one prescribable condition.

2. Method according to Claim 1, **characterized in that** the first processor disconnects the at least second processor and itself from the power supply means at the earliest when the process variables of the processes of the respective processors each indicate that control of the processes has ended and the second processor has informed the first processor that control of the processes has ended.

3. Method according to Claim 1, **characterized in that** the first processor disconnects the at least second processor and itself from the power supply means each time at least one prescribable time elapses.

4. Method according to Claim 1, **characterized in that** different priorities are assigned to the processes, and the first processor disconnects itself and the at least second processor from the power supply means as early as when the process variables of the processes with a higher priority of the respective processors each indicate that control of the processes has ended and the at least second processor has informed the first processor that control of the processes with a higher priority has ended.

5. Method according to Claims 1 and 4, **characterized in that** the first processor disconnects itself and the at least second processor from the power supply means after a respectively prescribable time only when the process variables of the processes with a higher priority of the respective processors each indicate that control of the processes has ended and the at least second processor has informed the first processor that control of the processes with a higher priority has ended.

6. Method according to Claim 1, **characterized in that** the processes are controlled by more than two processors, and **in that** an at least third processor informs the second processor that the respectively prescribable condition of the process variables is satisfied and the second processor informs the first processor that the respectively prescribable condition of the process variables of the third and of the second processor are satisfied, and the first processor disconnects the second and at least third processor and itself from the power supply means at the earliest when the process variables of the processes of the respective processors each satisfy at least one prescribable condition.

7. Method according to Claim 1, **characterized in that** each processor disconnects itself from the power supply means when the process variables each satisfy a prescribable condition.

8. Method according to one of the preceding claims, **characterized in that** the at least second and possibly at least third processor are initially switched to a passive standby state and then all the processors are simultaneously disconnected from the power supply means by the first processor when the process variables each satisfy a prescribable condition.

9. Apparatus for controlling processes with the aid of process variables in conjunction with a drive, in particular a motor for driving a vehicle, with the said apparatus comprising first means which execute and control the processes when and/or after the drive is switched off and the supply of power being maintained by at least one energy storage means when and/or after the drive is switched off, **characterized in that** the first means comprise at least two processors which control the processes, and the first processor disconnects the at least second processor and itself from the power supply means when the process variables of the processes of the respective processors each satisfy a prescribable condition.

## Revendications

1. Procédé de commande de procédé à l'aide de grandeurs de procédé en liaison avec un entraînement, notamment un moteur pour entraîner un véhicule, selon lequel on exécute et on commande les procédés lors et/ou après la coupure de l'entraînement et on maintient l'alimentation en énergie des procédés et des commandes par au moins un accumulateur d'énergie lors et/ou après la coupure de l'entraînement,
**caractérisé en ce qu'**
on commande les procédés à l'aide d'au moins deux processeurs et le premier processeur coupe alors au moins un second processeur et se coupe lui-même de l'alimentation en énergie lorsque les grandeurs de procédé des processeurs respectifs répondent chacune à au moins une condition prédéfinie.

2. Procédé selon la revendication 1,
**caractérisé en ce que**
le premier processeur coupe au moins le second processeur et se coupe lui-même, au plus tôt par rapport à l'alimentation en énergie, si les grandeurs de procédé des processeurs respectifs indiquent respectivement la condition de commande des procédés et que le second processeur transmet au premier processeur la condition de commande des procédés.

3. Procédé selon la revendication 1,
**caractérisé en ce que**
le premier processeur coupe au moins le second processeur et se coupe lui-même chaque fois à la fin d'au moins une durée prédéterminée, de l'alimentation en énergie.

4. Procédé selon la revendication 1,
**caractérisé en ce que**
des priorités différentes sont attribuées au procédé et le premier processeur se coupe déjà de lui-même et coupe au moins un second processeur de l'alimentation en énergie si les grandeurs de procédé de priorité supérieure indiquent aux processeurs respectifs, chaque fois la condition de commande des procédés et qu'au moins des seconds processeurs transmettent aux premiers processeurs la condition de commande de procédé de priorité supérieure.

5. Procédé selon les revendications 1 et 4,
**caractérisé en ce que**
le premier processeur se coupe de lui-même et au moins le second processeur de l'alimentation en énergie seulement après une durée prédéfinie respective, si les grandeurs de procédé de priorité supérieure indiquant aux processeurs respectifs chaque fois la condition de commande des procédés et qu'au moins le second processeur a transmis aux premiers processeurs la condition de commande de procédé de priorité supérieure.

6. Procédé selon la revendication 1,
**caractérisé en ce que**
les procédés sont commandés par plus de deux processeurs et au moins un troisième processeur transmet au second processeur le respect de la condition respectivement prédéfinie relative aux grandeurs de procédé et le second processeur transmet au premier processeur le fait que la condition respectivement prédéterminée des grandeurs de procédé du troisième et du second processeur sont remplies et le premier processeur coupe le second processeur et au moins le troisième processeur ainsi que lui-même de l'alimentation en énergie au plus tôt si les grandeurs de procédé des processeurs respectifs ont rempli respectivement au moins une condition prédéfinie.

7. Procédé selon la revendication 1,
**caractérisé en ce que**
chaque processeur se coupe de lui-même de l'alimentation en énergie si les grandeurs de procédé répondent respectivement à une condition prédéfinie.

8. Procédé selon l'une des revendications précédentes,
**caractérisé en ce qu'**
au moins le second et le cas échéant au moins le troisième processeur sont tout d'abord commutés dans un état d'attente passif et ensuite tous les processeurs sont coupés simultanément de l'alimentation en énergie par le premier processeur si les grandeurs de procédé répondent respectivement à une condition prédéfinie.

9. Dispositif de commande de procédé à l'aide de grandeurs de procédé en liaison avec un entraînement, notamment un moteur entraînant un véhicule, comportant des premiers moyens qui exécutent les procédés lors et/ou après la coupure de l'entraînement et commandent les procédés et maintiennent l'alimentation en énergie par au moins un accumulateur d'énergie lors et/ou après la coupure de l'entraînement,
**caractérisé en ce que**
les premiers moyens comportent au moins deux processeurs qui commandent les procédés et le premier processeur coupe alors au moins le second processeur et se coupe lui-même de l'alimentation en énergie si les grandeurs de procédé des processeurs respectifs remplissent chacune une condition prédéfinie.
